# EUROPEAN PATENT APPLICATION

(11) **EP 4 708 498 A2**
(43) Date of publication of application: **11.03.2026**
(21) Application number: 25165875.3
(22) Date of filing: 25.03.2025
(51) Int. Cl.: H01M 50/211, H01M 50/289, H01M 50/209

(54) **BATTERY PACK**

(30) Priority: 01.07.2024 KR 20240086401
(71) Applicant: SAMSUNG SDI CO., LTD., Yongin-si, Gyeonggi-do 17084 (KR)
(72) Inventor: KIM, KYOUNGSOO, 17084 Yongin-si, Gyeonggi-do (KR)
(74) Representative: Gulde & Partner

(57) **Abstract**

A battery pack includes a plurality of battery cells arranged adjacent to one another, ribs arranged respectively between battery cells of the plurality of battery cells, a frame connected to opposite end portions of the ribs and accommodating the plurality of battery cells together with the ribs, and an upper label attached to an upper surface of the frame, and the upper label includes at least one opening that is recessed from the frame in a direction toward the ribs, and the ribs each include a first region overlapping with the upper label, a second region located to correspond to the opening and having a thickness greater than a thickness of the first region, and a connection portion connecting the first region and the second region to each other.

## Description

### BACKGROUND

### 1. Field

Aspects of embodiments of the present disclosure relate to a battery pack.

### 2. Description of the Related Art

A secondary battery may be charged and discharged, unlike a primary battery that is not rechargeable. A secondary battery of low capacity may be used in a small-sized electronic device that may be portable, such as a smartphone, a feature phone, a laptop computer, a digital camera, or a camcorder, and a secondary battery of large capacity is widely used as a power source for driving a motor in a hybrid vehicle, an electric vehicle, etc., and as a battery for storing electric power, for example. The secondary battery includes an electrode assembly including a cathode and an anode, a case accommodating the electrode assembly, and an electrode terminal connected to the electrode assembly.

### SUMMARY

According to an aspect of one or more embodiments of the present disclosure, a battery pack having improved mechanical stability is provided.

However, aspects and technical purposes of the present disclosure are not limited to the above, and other aspects and objects not mentioned herein will be clearly understood by those skilled in the art from the following disclosure.

Additional aspects will be set forth, in part, in the description which follows and, in part, will be apparent from the description, or may be learned by practice of the presented embodiments of the disclosure.

According to one or more embodiments of the present disclosure, a battery pack includes a plurality of battery cells arranged adjacent to one another, ribs arranged respectively between battery cells of the plurality of battery cells, a frame connected to opposite end portions of the ribs and accommodating the plurality of battery cells together with the ribs, and an upper label attached to an upper surface of the frame, wherein the upper label includes at least one opening that is recessed from the frame in a direction toward the ribs, and the ribs each include a first region overlapping with the upper label, a second region located to correspond to the opening and having a thickness greater than a thickness of the first region, and a connection portion connecting the first region and the second region to each other.

In one or more embodiments, a thickness of the connection portion may change (e.g., continuously change) along a direction.

In one or more embodiments, the thickness of the second region may be equal to a thickness of the frame.

In one or more embodiments, the connection portion may include an inclined surface of which a thickness linearly increases along a direction.

In one or more embodiments, an angle formed by the inclined surface and an upper surface of the first region may be about 120° to about 155°.

In one or more embodiments, each of the ribs may further include a support portion protruding toward the plurality of battery cells.

In one or more embodiments, the thickness of the second region may be greater than a thickness of the frame.

In one or more embodiments, the second region may extend onto the frame.

In one or more embodiments, the frame may include a fastening portion that is inclined to form a certain angle with a horizontal surface.

According to one or more embodiments of the present disclosure, a battery pack includes a plurality of battery cells arranged adjacent to one another, ribs arranged respectively between battery cells of the plurality of battery cells, a frame connected to opposite end portions of the ribs and accommodating the plurality of battery cells together with the ribs, and an upper label attached to an upper surface of the frame, wherein the upper label includes at least one opening that is recessed from the frame in a direction toward the ribs, and the frame includes a fastening portion that is inclined to form a certain angle with a horizontal surface.

In one or more embodiments, the ribs may each include a first region overlapping the upper label, a second region located on the opening and having a thickness greater than a thickness of the first region, and a connection portion connecting the first region and the second region to each other.

In one or more embodiments, a thickness of the connection portion may change (e.g., continuously change) along a direction.

In one or more embodiments, the connection portion may include an inclined surface of which a thickness linearly increases along a direction.

In one or more embodiments, an angle formed by the inclined surface and an upper surface of the first region may be about 120° to about 155°.

In one or more embodiments, each of the ribs may further include a support portion protruding toward the battery cells.

### BRIEF DESCRIPTION OF THE DRAWINGS

The accompanying drawings illustrate some example embodiments of the present disclosure and, together with the foregoing disclosure, serve to provide further understanding of the technical features of the present disclosure; however, the present disclosure is not to be construed as being limited to the drawings.
FIG. 1 is a perspective view schematically showing a battery pack according to an embodiment of the present disclosure;
FIG. 2 is an exploded perspective view of the battery pack of FIG. 1;
FIG. 3 is a perspective view schematically showing an example of a battery cell in the battery pack of FIG. 1;
FIG. 4 is a perspective view schematically showing a region "X" of FIG. 1, according to an embodiment;
FIG. 5 is a cross-sectional view schematically showing a cross-section taken along the line A-A of FIG. 4, according to an embodiment;
FIG. 6 is a cross-sectional view schematically showing a cross-section taken along the line A-A of FIG. 4, according to another embodiment;
FIG. 7 is a cross-sectional view schematically showing a cross-section taken along the line A-A of FIG. 4, according to another embodiment;
FIG. 8 is a perspective view schematically showing a region "X" of FIG. 1, according to another embodiment;
FIG. 9 is a cross-sectional view schematically showing a cross-section taken along the line B-B of FIG. 8;
FIG. 10 is a cross-sectional view schematically showing a cross-section taken along the line C-C of FIG. 1; and
FIG. 11 is a partial perspective view schematically showing a coupling state between the battery pack of FIG. 1 to an external component, according to an embodiment.

### DETAILED DESCRIPTION

Herein, some example embodiments of the present disclosure will be described in further detail with reference to the accompanying drawings. However, it is to be understood that the terms used in the specification and the appended claims are not to be construed as being limited to general and dictionary meanings, but are to be interpreted based on the meanings and concepts corresponding to technical aspects of the present disclosure on the basis of the principle that the inventor is allowed to define terms appropriately for the best explanation. Therefore, the description proposed herein is provided as an example for the purpose of illustrations, and is not intended to limit the scope of the disclosure, and it is to be understood that other equivalents and modifications could be made thereto without departing from the spirit and scope of the disclosure.

In addition, it is to be further understood that the terms "comprise" or "include" and/or "comprising" or "including," when used in this specification, specify the presence of stated features, numbers, steps, operations, elements, and/or components, but do not preclude the presence or addition of one or more other features, numbers, steps, operations, elements, components, and/or groups thereof.

In addition, the accompanying drawings may not be shown according to the actual scale to help understand the invention, and the dimensions of some components may be exaggerated. Further, the same element in different embodiments may be given the same reference numeral.

Expressions including ordinal numbers, such as "first" and "second," indicate various elements, but the above expressions do not limit the elements. These terms are used to distinguish one element from another, and unless the context clearly indicates otherwise, a first element may be a second element.

As used herein, the singular forms are intended to include the plural forms as well, unless the context clearly indicates otherwise.

It is to be understood that when an element is referred to being "on (or below)" or "above (or under)" another element, it may be positioned in contact with an upper surface (or a lower surface) of the other element, but another element may be positioned between the element and the other element on (or below) the element.

It is to be further understood that when an element is referred to as being "connected," "coupled," or "joined" to another element, the elements may be directly connected or joined to each other, or one or more intervening elements may be present between them, or each element may be "connected", "coupled" or "joined" to each other through another element. It is to be understood that when an element is referred to as being "electrically coupled" to another element, the element may be directly electrically coupled to the another element or one or more intervening elements may be present.

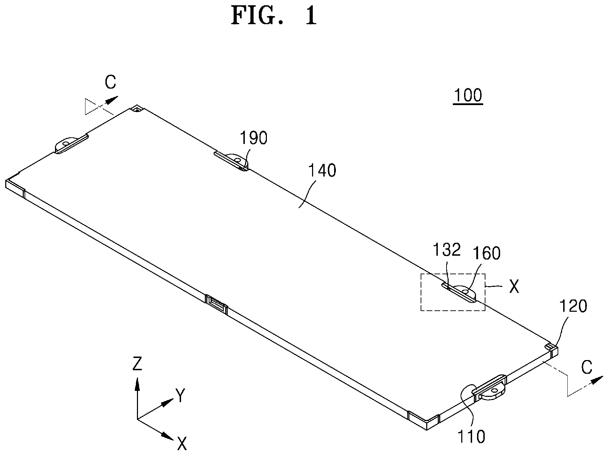

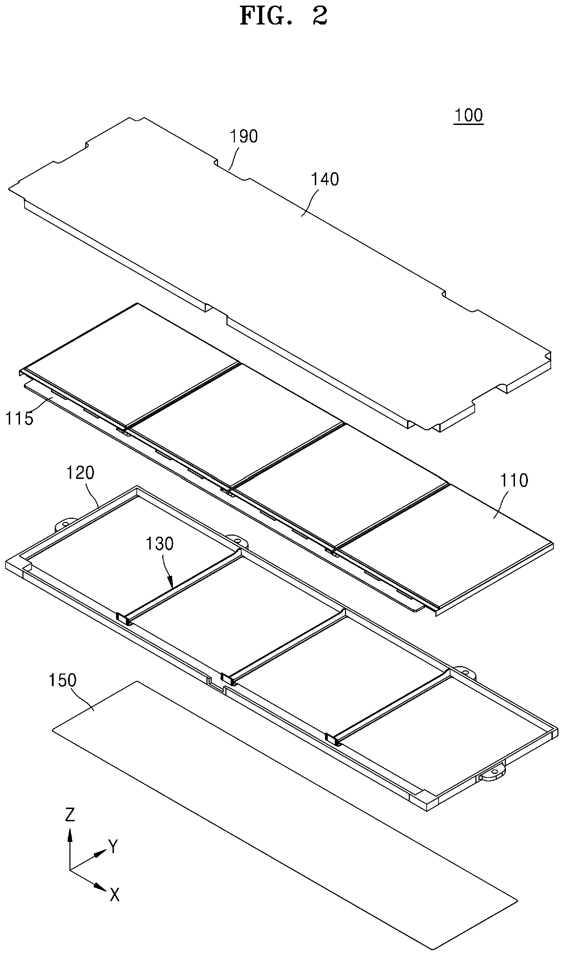

FIG. 1 is a perspective view schematically showing a battery pack according to an embodiment of the present disclosure; and FIG. 2 is an exploded perspective view of the battery pack of FIG. 1.

Referring to FIGS. 1 and 2, a battery pack 100 according to an embodiment of the present disclosure may include a plurality of battery cells 110 arranged in a direction, ribs 130 arranged among, or between, battery cells 110 of the plurality of battery cells 110 that are arranged adjacent to each other, a frame 120 connected to opposite end portions of the ribs 130 and accommodating the plurality of battery cells 110 along with the ribs 130, an upper label 140 attached to an upper surface of the frame 120, and a lower label 150 attached to the lower surface of the frame 120.

The battery pack 100 may further include a protection circuit 115 adjacent to the plurality of battery cells 110. The protection circuit 115 may perform various protection functions to improve stability and lifespan of the battery pack 100.

For example, the protection functions may include an overcharge protection function for preventing or substantially preventing the battery cell 110 from being charged to a certain voltage (e.g., a set voltage) or greater, an over-discharge protection function for preventing or substantially preventing the battery cell 110 from being discharged to a certain voltage (e.g., a set voltage) or less, an overcurrent protection function for preventing or substantially preventing a current from flowing at a certain current value (e.g., a set current value) or greater in the battery cell 110, and a short-circuit protection function for sensing a short circuit of the battery pack 100.

The frame 120 is connected to the ribs 130 and may include a fastening portion 160 that may fix the battery pack 100 to an external component (not shown). The fastening portion 160 may fix the external component (not shown) and the battery pack 100 via a fastening member (not shown). For example, the external component may include, but is not limited to, a laptop computer, a smartphone, a digital camera, etc.

In an embodiment, the upper label 140 and the lower label 150 may be attached to the upper and lower surfaces of the frame 120. The upper label 140 and the lower label 150 may be provided to identify and provide information about the battery pack 100, and may display electrical specifications. Also, the upper label 140 and the lower label 150 may protect the plurality of battery cells 110 from scratches from the outside, and may prevent or substantially prevent the plurality of battery cells 110 from being short-circuited due to the contact to the outside. Also, the upper label 140 and the lower label 150 may accommodate the plurality of battery cells 110 along with the frame 120 and the ribs 130.

In an embodiment, the upper label 140 and the lower label 150 are attached to the upper and lower surfaces of the frame 120, and the upper label 140 and the lower label 150 may be spaced apart from the plurality of battery cells 110 in consideration of a swelling effect in which battery cells 110 of the plurality of battery cells 110 expand.

In an embodiment, the upper label 140 may include at least one opening 190 that is recessed from the frame 120 in a direction toward the ribs 130. The opening 190 may be formed at a portion where the ribs 130 and the frame 120 are connected.

In addition, noise may generate as the ribs 130 and the upper label 140 come into contact with and then fall apart from each other. Therefore, the ribs 130 may be formed not to contact the upper label 140 in the region overlapping the upper label 140. For example, in the region where the upper label 140 and the ribs 130 overlap each other, a thickness of each rib 130 may be less than that of the plurality of battery cells 110, but is not limited thereto.

Therefore, the thickness of the rib 130 in the region where the upper label 140 and the ribs 130 overlap each other may be less than a thickness t_{f} of the frame 120 to which the upper label 140 is attached.

Here, the thickness of the rib 130 and the thickness t_{f} of the frame 120 may denote heights of the rib 130 and the frame 120 as measured in a Z-axis direction.

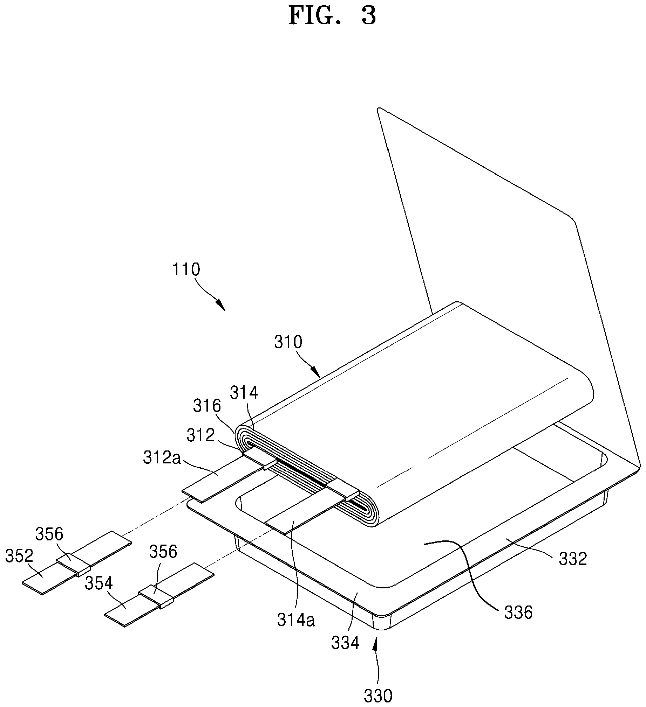

FIG. 3 is a perspective view schematically showing an example of a battery cell in the battery pack of FIG. 1.

Referring to FIG. 3, the battery cell 110 may include an electrode assembly 310 and a pouch 330 accommodating the electrode assembly 310.

The electrode assembly 310 may include a first electrode plate 312, a second electrode plate 314, and a separator 316 therebetween.

For example, the electrode assembly 310 may be manufactured by sequentially stacking the first electrode plate 312, the separator 316, and the second electrode plate 314, and then winding the stack in a jelly-roll form. However, the present disclosure is not limited thereto, and the electrode assembly 310 may be manufactured by sequentially stacking the first electrode plate 312, the separator 316, and the second electrode plate 314 multiple times.

The first electrode plate 312 may be one of a cathode film or an anode film. If the first electrode plate 312 is a cathode film, the second electrode plate 314 may be an anode film. By contrast, if the first electrode plate 312 is an anode film, the second electrode plate 314 may be a cathode film.

That is, the first electrode plate 312 and the second electrode plate 314 are formed with different electrical polarities and are not limited to a specific polarity. However, for convenience of description, an example in which the first electrode plate 312 is formed of a cathode film and the second electrode plate 314 is formed of an anode film is described below.

The first electrode plate 312 may include a first active material portion on which a first active material is applied, and a first non-applied region which is provided at a side of the first active material portion and on which the first active material is not applied. The first active material may be a cathode active material, and the first non-applied region may be a cathode active material-non-coated portion.

In an embodiment, for example, the cathode active material is applied on at least one surface of an aluminum plate so as to form the first active material portion, and a partial region of the aluminum plate is not applied with the cathode active material and forms the cathode active material-non-coated portion that is the first non-coated region.

The first active material may include a cathode active material such as a lithium-containing transition metal oxide, such as LiCoO₂, LiNiO₂, LiMnO₂, and LiMnO₄, or a lithium cathode active material.

The second electrode plate 314 may include a second active material portion on which a second active material is applied, and a second non-coated region which is provided at a side of the second active material portion and on which the second active material is not applied. The second active material may include an anode active material, and the second non-coated region may be an anode active material-non-coated portion.

In an embodiment, for example, an anode active material is applied to at least one surface of a copper plate so as to form the second active material portion, and a partial region of the copper plate remains so as to form the anode active material-non-coated portion that is the second non-coated region.

The second active material may be, for example, an anode active material, and, in an embodiment, may include a carbon material, such as any of crystalline carbon, amorphous carbon, carbon composite, and carbon fiber, lithium metal, or lithium alloy.

The separator 316 is a porous membrane that prevents or substantially prevents electrical contact between the first electrode plate 312 and the second electrode plate 314, and may be formed of polyethylene, polypropylene, etc. The separator 316 may further include ceramic particles and, in an embodiment, may be formed of a solid polymer electrolyte.

The separator 316 may be formed as an independent film, or may be formed by forming a non-conductive porous layer on the first electrode plate 312 or the second electrode plate 314.

The pouch 330 accommodates the electrode assembly 310 and, in an embodiment, may include a pair of side wings 332 and a terrace portion 334 formed through fusion bonding.

In further detail, an accommodation space 336 that may accommodate the electrode assembly 310 may be formed in a first region of the pouch 330 through a drawing process, etc., and when the electrode assembly 310 is accommodated in the accommodation space 336, a second region of the pouch 330, which is continuously formed from the first region of the pouch 330, is folded to cover the accommodation space 336. Accordingly, the first region and the second region of the pouch 330 overlap each other and form upper and lower surfaces of the pouch 330.

The first region and the second region of the pouch 330, which overlap each other, are fusion bonded at an edge of the accommodation space 336. As such, the pouch 330 may seal the electrode assembly 310 and the fusion bonded edge forms the pair of side wings 332 and the terrace portion 334.

In an embodiment, the pair of side wings 332 are bent in a direction. For example, the pair of side wings 332 may be bent toward the side surface of the battery cell 110, and, thus, a concave portion may be formed between the pair of side wings 332 and the side surface of the battery cell 110.

In an embodiment, the pouch 330 may have, for example, a triple-layered structure including an insulating layer, a metal layer, and an insulating layer. For example, the metal layer may be formed of aluminum, steel, stainless steel, etc., and the insulating layer may be formed of cast polypropylene (CPP), polyethylene terephthalate (PET), nylon, etc., but are not limited thereto.

In an embodiment, a first tab 312a may be connected to the first non-coated region of the first electrode plate 312, and a second tab 314a may be connected to the second non-coated region of the second electrode plate 314. The first tab 312a and the second tab 314a may be welded with a first lead 352 and a second lead 354 of an external terminal and may be electrically connected to the outside. Here, a tab film 356 may be attached to the first lead 352 and the second lead 354 for insulation from the pouch 330. The wings 332 of the pouch 330 are thermally fused, and a thermal fusion material generally has a weak adhesive property with metal. Thus, the tab film 356 of a thin film type is attached to the first tab 312a and the second tab 314a so as to be fused with the pouch 330.

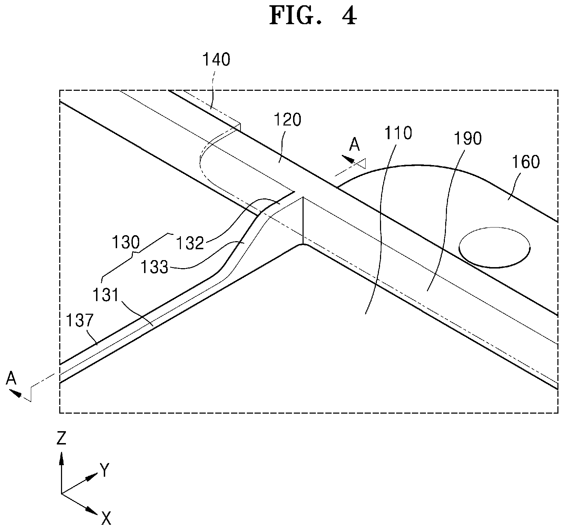

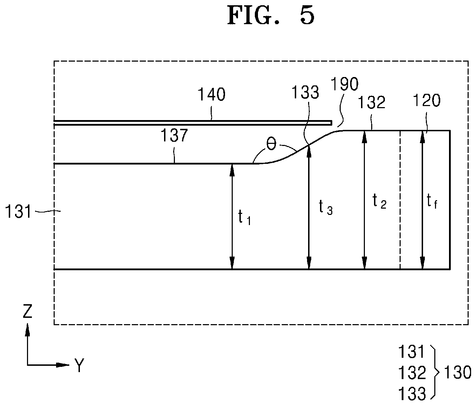

FIG. 4 is a perspective view schematically showing a region "X" in FIG. 1; and FIG. 5 is a cross-sectional view schematically showing a cross-section taken along the line A-A of FIG. 4, according to an embodiment.

Referring to FIGS. 4 and 5, the upper label 140 may include at least one opening 190 that is recessed from the frame 120 in a direction toward the ribs 130. The opening 190 may be formed at a portion where the ribs 130 and the frame 120 are connected.

The rib 130 may include a first region 131 located in the region overlapping the upper label 140, a second region 132 located on the opening 190, and a connection portion 133 connecting the first region 131 and the second region 132 to each other.

Because the first region 131 is located in the region overlapping the upper label 140, noise may occur when the first region 131 and the upper label 140 come into contact with and then fall apart from each other. Therefore, a thickness t₁ of the first region 131 may be formed so as not to come into contact with the upper label 140. For example, the thickness t₁ of the first region 131 may be less than a thickness of the plurality of battery cells 110.

The second region 132 may be thicker than the first region 131. In an embodiment, for example, a thickness t₂ of the second region 132 may be equal to the thickness t_{f} of the frame 120.

If the thickness t₂ of the second region 132 is equal to the thickness t_{f} of the frame 120, the second region 132 and the upper label 140 might come into contact with each other, thereby generating noise. However, because the upper label 140 has the opening 190 at the portion overlapping the second region 132, noise generation due to contact between the second region 132 and the upper label 140 may be prevented or substantially prevented.

A first end of the connection portion 133 may be connected to the first region 131, and a second end of the connection portion 133 may be connected to the second region 132. In an embodiment, a thickness t₃ of the connection portion 133 may be continuously changed between the thickness t₁ of the first region 131 and the thickness t₂ of the second region 132.

In an embodiment, for example, the connection portion 133 may include an inclined surface where the thickness t₃ linearly increases from the thickness t₁ of the first region 131 to the thickness t₂ of the second region 132. If the connection portion 133 is omitted and the first region 131 and the second region 132 directly come into contact with each other such that the thickness of the rib 130 is changed discontinuously, in a case in which an impact is applied to the battery pack 100, a fixed reaction force of a fastening member (not shown) fastened with the fastening portion 160 may not be endured, and stress may be concentrated at a point where the thickness of the rib 130 is discontinuously changed and damage may occur.

However, in embodiments of the present disclosure, the thickness t₃ of the connection portion 133 connecting the first region 131 to the second region 132, the first and second regions having different thicknesses, is continuously changed, and damage caused by an external impact may be prevented or substantially prevented. In further detail, when the thickness of the rib 130 is continuously changed from the thickness t₁ of the first region 131 to the thickness t₂ of the second region 132 due to the connection portion 133, a stress concentration coefficient applied to the rib 130 may be reduced by two times or greater, as compared with a case in which the first region 131 and the second region 132 directly come into contact with each other and the thickness of the rib 130 is discontinuously changed.

In addition, it may be generally confirmed in various theses and textbooks about research on the stress distribution that, as an angle formed by two adjacent surfaces increases, the stress concentration is relieved. In particular, when the angle formed by two surfaces is 120° or greater, the stress concentration relief may be noticeable. Therefore, in an embodiment, an angle θ formed by the inclined surface of the connection portion 133 and an upper surface 137 of the first region 131 is 120° or greater, and the concentration of stress on a certain point of the rib 130 may be effectively relieved and damage to the rib 130 due to an external impact may be prevented or substantially prevented.

However, when the angle θ formed by the inclined surface of the connection portion 133 and the upper surface 137 of the first region 131 is excessively large, a section of the connection portion 133 overlapping the upper label 140 also increases, and, thus, a probability that the connection portion 133 is attached to the upper label 140 is also increased. In this case, noise due to the attachment between the upper label 140 and the connection portion 133 may generate. Therefore, in an embodiment, in order not to generate the noise due to the attachment between the connection portion 133 and the upper label 140, the angle θ formed by the connection portion 133 and the upper surface 137 of the first region 131 may be 155° or less.

That is, when the angle θ formed by the inclined surface of the connection portion 133 and the upper surface 137 of the first region 131 is about 120° to about 155°, the stress applied to the rib 130 may be effectively relieved, and, at the same time, the noise generation due to the attachment between the connection portion 133 and the upper label 140 may be prevented or substantially prevented.

In addition, the connection portion 133 may have any kind of shape, provided that the thickness of the region adjacent to the second region 132 is greater than the thickness of the region adjacent to the first region 131.

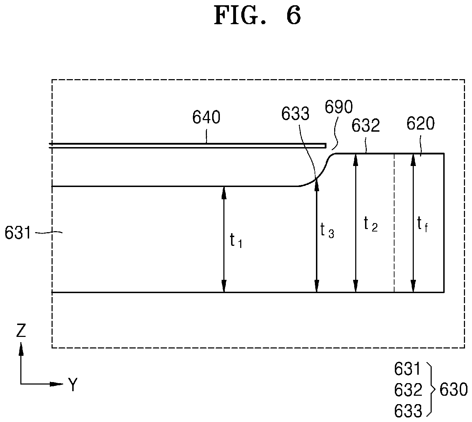

FIG. 6 is a cross-sectional view schematically showing a cross-section taken along the line A-A of FIG. 4, according to another embodiment.

Referring to FIG. 6, in another embodiment of the present disclosure, a rib 630 may include a first region 631, a second region 632, and a connection portion 633 connecting the first region 631 and the second region 632 to each other.

Because the first region 631 is located in a region overlapping an upper label 640, the first region 631 may have the thickness t₁ that does not come into contact with the upper label 640. For example, the thickness t₁ of the first region 631 may be less than that of the plurality of battery cells (not shown).

The second region 632 may be thicker than the first region 631. For example, the thickness t₂ of the second region 632 may be equal to the thickness t_{f} of a frame 620.

If the thickness t₂ of the second region 632 is equal to the thickness t_{f} of the frame 620, the second region 632 and an upper label 640 may come into contact with each other, thereby generating noise. However, because the upper label 640 has an opening 690 in the portion overlapping the second region 632, noise generation due to the contact between the second region 632 and the upper label 640 may be prevented or substantially prevented.

A first end of the connection portion 633 may be connected to the first region 631, and a second end of the connection portion 633 may be connected to the second region 632. In an embodiment, the thickness t₃ of the connection portion 633 may be continuously changed between the thickness t₁ of the first region 631 and the thickness t₂ of the second region 632.

For example, the connection portion 633 may be formed such that an inclination thereof gradually increases from the first region 631 to the second region 632. In an embodiment, the connection portion 633 may include a concave surface between the first region 631 and the second region 632. When the connection portion 633 includes the concave surface, noise generation due to the attachment between the connection portion 633 and the upper label 640 may be more effectively prevented or substantially prevented.

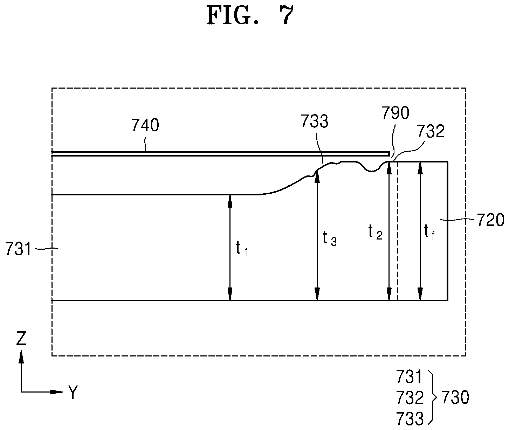

FIG. 7 is a cross-sectional view schematically showing a cross-section taken along the line A-A of FIG. 4, according to another embodiment.

Referring to FIG. 7, in another embodiment of the present disclosure, a rib 730 may include a first region 731, a second region 732, and a connection portion 733 connecting the first region 731 and the second region 732 to each other.

Because the first region 731 is located in a region overlapping an upper label 740, the first region 731 may have the thickness t₁ that does not come into contact with the upper label 740. For example, the thickness t₁ of the first region 731 may be less than that of the plurality of battery cells (not shown).

The second region 732 may be thicker than the first region 731. For example, the thickness t₂ of the second region 732 may be equal to the thickness t_{f} of a frame 720.

If the thickness t₂ of the second region 732 is equal to the thickness t_{f} of the frame 720, the second region 732 and an upper label 740 may come into contact with each other, thereby generating noise. However, because the upper label 740 has an opening 790 in the portion overlapping the second region 732, noise generation due to contact between the second region 732 and the upper label 740 may be prevented or substantially prevented.

A first end of the connection portion 733 may be connected to the first region 731, and a second end of the connection portion 733 may be connected to the second region 732. In an embodiment, the thickness t₃ of the connection portion 733 may be continuously changed between the thickness t₁ of the first region 731 and the thickness t₂ of the second region 732.

For example, the connection portion 733 may include at least one region in which the thickness t₃ is reduced from the first region 731 toward the second region 732. In an embodiment, the connection portion 733 may include a wave-shaped surface between the first region 731 and the second region 732. In an embodiment, the connection portion 733 includes the wave-shaped surface, at least one convex shape is formed between the first region 731 and the second region 732, and the above structure may have more robust characteristics with respect to a stress.

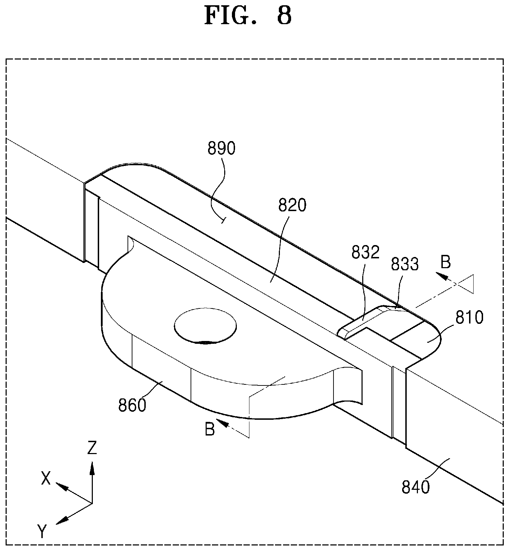

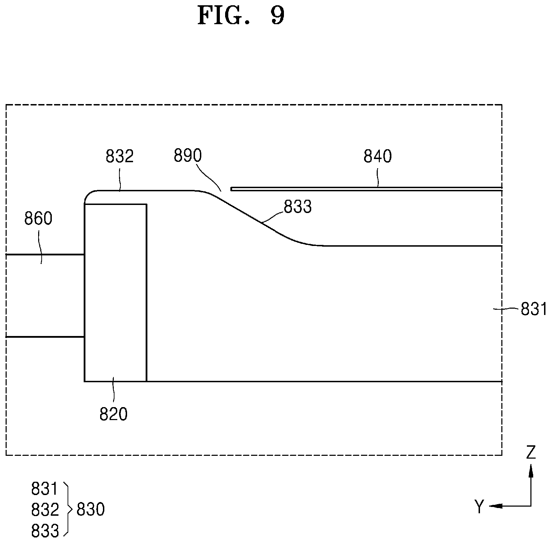

FIG. 8 is a perspective view schematically showing a region "X" in FIG. 1, according to another embodiment; and FIG. 9 is a cross-sectional view schematically showing a cross-section taken along the line B-B of FIG. 8.

Referring to FIGS. 8 and 9, in the present embodiment of the present disclosure, a rib 830 may include a first region 831 located in a region overlapping an upper label 840, a second region 832 located on an opening 890, and a connection portion 833 connecting the first region 831 and the second region 832 to each other.

Because the first region 831 is located in the region overlapping the upper label 840, the first region 831 may have a thickness that does not come into contact with the upper label 840. For example, the thickness of the first region 831 may be less than a thickness of a plurality of battery cells 810.

A thickness of the second region 832 may be greater than that of a frame 820. In addition, the second region 832 may extend onto the frame 820. That is, the thickness of the frame 820 may be partially increased at a portion connecting to the second region 832.

In addition, because the upper label 840 includes the opening 890 in the portion overlapping the second region 832, even if the thickness of the second region 832 is greater than that of the frame 820, noise generation due to contact between the second region 832 and the upper label 840 may be prevented or substantially prevented.

If the thickness of the second region 832 is greater than that of the frame 820 and the second region 832 extends onto the frame 820, the stability of the battery pack may be further increased. For example, when an impact is applied to the battery pack after the battery pack is fastened with an external component (e.g., a laptop computer) via a fastening portion 860, the impact may be applied first to the second region 832 that extends onto the frame 820 and protrudes, and, thus, the frame 820 and battery cells 810 may be protected. Also, because the battery pack may be further separated from an external environment, contact of the battery pack with the outside and a short circuit of the battery pack may be prevented or substantially prevented.

In addition, a first end of the connection portion 833 may be connected to the first region 831, and a second end of the connection portion 833 may be connected to the second region 832. In an embodiment, the thickness of the connection portion 833 may be continuously changed between the thickness of the first region 831 and the thickness of the second region 832.

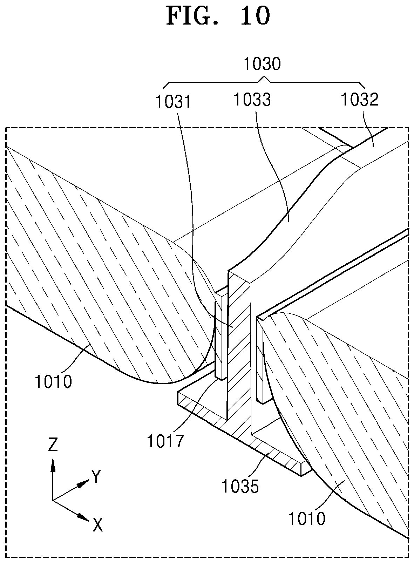

FIG. 10 is a cross-sectional view schematically showing a cross-section taken along the line C-C of FIG. 1.

Referring to FIG. 10, in another embodiment of the present disclosure, a rib 1030 may include a first region 1031 located in a region overlapping an upper label (not shown), a second region 1032 located on an opening (not shown), and a connection portion 1033 connecting the first region 1031 and the second region 1032 to each other.

In an embodiment, each rib 1030 may further include a support portion 1035 protruding in a direction (X-axis direction) toward a plurality of battery cells 1010.

The plurality of battery cells 1010 may be pouch cells, and a pouch cutting surface 1017 may be exposed during a process of manufacturing the pouch cells. In an embodiment, the pouch cutting surface 1017 may expose cross-sections of three layers constituting the pouch, for example, an insulating layer, a metal layer, and another insulating layer.

When the rib 1030 includes the support portion 1035 protruding in the direction toward the plurality of battery cells 1010 and the battery cell 1010 is arranged such that the pouch cutting surface 1017 faces the support portion 1035, the support portion 1035 covers the pouch cutting surface 1017 to prevent or substantially prevent the pouch cutting surface 1017 from being exposed to the outside. Therefore, a risk that the metal layer exposed through the pouch cutting surface 1017 comes into contact with the outside and is short-circuited may be prevented or substantially prevented.

Also, the support portion 1035 may mechanically protect the battery cells 101 and may support the battery cells 1010 along with a frame (not shown).

Also, a total area of the rib 1030 accommodating and protecting the battery cells 1010 is increased as much as the area of the support portions 1035, and, thus, the battery cells 1010 may be protected against an external shock.

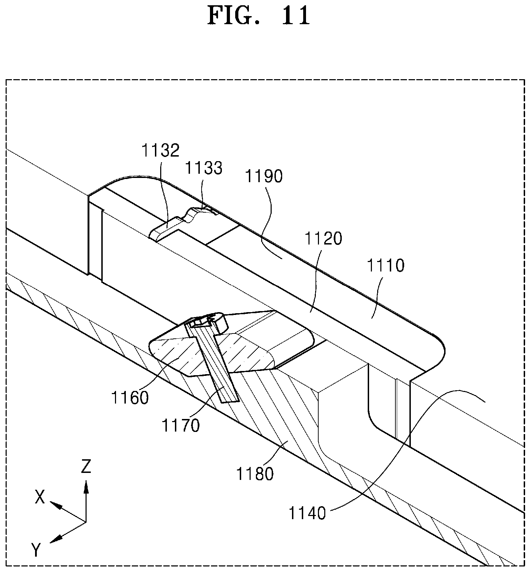

FIG. 11 is a partial perspective view schematically showing a coupling state between the battery pack of FIG. 1 to an external component, according to an embodiment.

Referring to FIG. 11 along with FIG. 8, a fastening portion 1160 may fix an external component 1180 to the battery pack via a fastening member 1170. The external component 1180 may include, but is not limited to, a laptop computer, a smartphone, a digital camera, etc.

The fastening member 1170 may be, for example, a bolt, but may include any type of member to fasten the battery pack with the external component 1180.

In addition, as the battery pack and the external component 1180 become smaller and thinner, when the fastening portion 860 is parallel to a horizontal surface as shown in FIG. 8, a fastening depth in the external component (not shown) may not be sufficiently secured while the fastening member (not shown) fastens the battery pack with the external component in the fastening portion 860.

In an embodiment of the present disclosure, a frame 1120 includes the fastening portion 1160 that is inclined to form a certain angle with respect to a horizontal surface and the external component 1180 includes a protrusion corresponding to the fastening portion 1160, and the fastening depth in the external component 1180 may be sufficiently secured while the fastening member 1170 fastens the battery pack with the external component 1180 in the fastening portion.

The inclined angle of the fastening portion 1160 may vary depending on an application. For example, if the fastening depth of the external component 1180 is sufficiently secured, the fastening portion 1160 may be parallel to the horizontal surface, and if the fastening depth of the external component 1180 is not sufficiently secured, the inclined angle of the fastening portion 1160 may be increased. In an embodiment, when the external component 1180 is very thin, the inclined angle of the fastening portion 1160 may be 90°.

In an embodiment, the angle formed by the fastening portion 1160 with the horizontal surface may be about 0° to about 90°.

A process of rotating the fastening portion 1160 may include a post-process applied to the frame 1120, such as drilling, or the fastening portion 1160 that is inclined in advance may be manufactured during the manufacturing process. In an embodiment, the process of manufacturing the inclined fastening portion 1160 in the manufacturing process itself may include manufacturing the inclined fastening portion 1160 using an inclined ejector, or manufacturing the inclined fastening portion 1160 using a hydraulic or motor actuator, etc. in a mold. However, the present disclosure is not limited thereto.

According to embodiments of the present disclosure, a battery pack having improved durability such that frame ribs may endure a fixed reaction force of the fastening member even with a strong flow effect may be provided.

Although the present disclosure has been described with respect to some example embodiments, it is to be understood that the detailed description and specific examples, while indicating some example embodiments of the disclosure, are provided by way of illustration, and various changes and modifications within the spirit and scope of the disclosure will be apparent to one of ordinary skill in the art from the detailed description.

## Claims

1. A battery pack (100) comprising:
a plurality of battery cells (101, 110, 810, 1010) arranged adjacent to one another;
ribs (130, 630, 730, 830, 1030) arranged respectively between battery cells (101, 110, 810, 1010) of the plurality of battery cells (101, 110, 810, 1010);
a frame (620, 720, 820, 1120) connected to opposite end portions of the ribs (130, 630, 730, 830, 1030) and accommodating the plurality of battery cells (101, 110, 810, 1010) together with the ribs (130, 630, 730, 830, 1030); and
an upper label (140, 640, 740, 840) attached to an upper surface (137) of the frame (620, 720, 820, 1120),
wherein the upper label (140, 640, 740, 840) comprises at least one opening (190, 690, 790, 890) that is recessed from the frame (620, 720, 820, 1120) in a direction toward the ribs (130, 630, 730, 830, 1030), and
the ribs (130, 630, 730, 830, 1030) each comprise a first region (131, 631, 731, 831, 1031) overlapping with the upper label (140, 640, 740, 840), a second region (132, 632, 732, 832, 1032) located to correspond to the opening (190, 690, 790, 890) and having a thickness greater than a thickness (t₁) of the first region (131, 631, 731, 831, 1031), and a connection portion (133, 633, 733, 833, 1033) connecting the first region (131, 631, 731, 831, 1031) and the second region (132, 632, 732, 832, 1032) to each other.

2. The battery pack (100) as claimed in claim 1, wherein a thickness (t₃) of the connection portion (133, 633, 733, 833, 1033) changes along a direction.

3. The battery pack (100) as claimed in claim 1 or 2, wherein the thickness (t₂) of the second region (132, 632, 732, 832, 1032) is equal to a thickness (t_{f}) of the frame (620, 720, 820, 1120).

4. The battery pack (100) as claimed in claims 1 to 3, wherein the connection portion (133, 633, 733, 833, 1033) comprises an inclined surface of which a thickness linearly increases along a direction.

5. The battery pack (100) as claimed in claim 4, wherein an angle (θ) formed by the inclined surface and an upper surface (137) of the first region (131, 631, 731, 831, 1031) is about 120° to about 155°.

6. The battery pack (100) as claimed in claims 1 to 5, wherein each of the ribs (130, 630, 730, 830, 1030) further comprises a support portion (1035) protruding toward the battery cells (101, 110, 810, 1010).

7. The battery pack (100) as claimed in claims 1 to 6, wherein the thickness (t₂) of the second region (132, 632, 732, 832, 1032) is greater than a thickness (t_{f}) of the frame (620, 720, 820, 1120).

8. The battery pack (100) as claimed in claim 7, wherein the second region (132, 632, 732, 832, 1032) extends onto the frame (620, 720, 820, 1120).

9. The battery pack (100) as claimed in claims 1 to 8, wherein the frame (620, 720, 820, 1120) comprises a fastening portion (160, 860, 1160) that is inclined to form a certain angle with a horizontal surface.

10. A battery pack (100) comprising:
a plurality of battery cells (101, 110, 810, 1010) arranged adjacent to one another;
ribs (130, 630, 730, 830, 1030) arranged respectively between battery cells (101, 110, 810, 1010) of the plurality of battery cells (101, 110, 810, 1010);
a frame (620, 720, 820, 1120) connected to opposite end portions of the ribs (130, 630, 730, 830, 1030) and accommodating the plurality of battery cells (101, 110, 810, 1010) together with the ribs (130, 630, 730, 830, 1030); and
an upper label (140, 640, 740, 840) attached to an upper surface (137) of the frame (620, 720, 820, 1120),
wherein the upper label (140, 640, 740, 840) comprises at least one opening (190, 690, 790, 890) that is recessed from the frame (620, 720, 820, 1120) in a direction toward the ribs (130, 630, 730, 830, 1030), and
the frame (620, 720, 820, 1120) comprises a fastening portion (160, 860, 1160) that is inclined to form a certain angle with a horizontal surface.

11. The battery pack (100) as claimed in claim 10, wherein the ribs (130, 630, 730, 830, 1030) each comprise a first region (131, 631, 731, 831, 1031) overlapping with the upper label (140, 640, 740, 840), a second region (132, 632, 732, 832, 1032) located to correspond to the opening (190, 690, 790, 890) and having a thickness greater than a thickness (t₁) of the first region (131, 631, 731, 831, 1031), and a connection portion (133, 633, 733, 833, 1033) connecting the first region (131, 631, 731, 831, 1031) and the second region (132, 632, 732, 832, 1032) to each other.

12. The battery pack (100) as claimed in claim 11, wherein a thickness (t₃) of the connection portion (133, 633, 733, 833, 1033) changes along a direction.

13. The battery pack (100) as claimed in claim 11 or 12, wherein the connection portion (133, 633, 733, 833, 1033) comprises an inclined surface of which a thickness linearly increases along a direction.

14. The battery pack (100) as claimed in claim 13, wherein an angle (θ) formed by the inclined surface and an upper surface (137) of the first region (131, 631, 731, 831, 1031) is about 120° to about 155°.

15. The battery pack (100) as claimed in claims 11 to 14, wherein each of the ribs (130, 630, 730, 830, 1030) further comprises a support portion (1035) protruding toward the battery cells (101, 110, 810, 1010).
